# EUROPEAN PATENT SPECIFICATION

(11) **EP 2 754 134 B1**
(45) Date of publication and mention of the grant of the patent: **28.08.2019**
(21) Application number: 12769342.2
(22) Date of filing: 04.09.2012
(51) Int. Cl.: G07C 9/00

(54) **SECURITY SYSTEM AND DEVICE THEREFOR**
SICHERHEITSSYSTEM UND VORRICHTUNG DAFÜR
SYSTÈME DE SÉCURITÉ ET DISPOSITIF ASSOCIÉ

(30) Priority: 05.09.2011 GB 201115255
(43) Date of publication of application: 16.07.2014
(73) Proprietor: Jaguar Land Rover Limited, Coventry, Warwickshire CV3 4LF (GB)
(72) Inventor: FORD, Gary, Coventry Warwickshire CV3 4LF (GB)
(74) Representative: Holmes, Matthew William
(86) International application number: PCT/EP2012/067230
(87) International publication number: WO 2013/034556

(56) References cited:
- DE-C1- 19 711 901
- US-A1- 2003 107 469
- US-A1- 2006 186 988
- US-A1- 2009 096 578
- US-A1- 2009 284 345
- US-A1- 2011 035 095
- US-A1- 2011 082 625

## Description

### FIELD OF THE INVENTION

The present invention relates to a security system and device and particularly, but not exclusively, to a secondary entry key for a security system that is co-operative with a primary entry key for the same security system. The invention finds advantageous application with vehicles and may provide a more compact, lightweight and waterproof entry key that may be used to lock and unlock a vehicle. Aspects of the invention relate to a system, to a vehicle and to a method.

### BACKGROUND OF THE INVENTION

Smart key fobs are commonly used for gaining entry to and securely locking vehicles. Smart key fobs are also used to enable operation of the vehicle for driving, by disabling the vehicle's immobiliser and activating the vehicle's ignition. Smart key fobs do not require the use of a mechanical key to unlock and lock a vehicle or initiate operation of the vehicle's engine. Rather encrypted communication between the key and a computerised control system of the vehicle enables the vehicle to determine that the smart key fob is present and then automatically carry out certain tasks. For example, a control system of a vehicle can detect the presence of the smart key fob within range of the vehicle and unlock the vehicle; a control system of the vehicle can detect the presence of the smart key fob within the vehicle and will (typically upon receiving additional input commands from a user) allow the engine of the vehicle to be started.

Typically, a smart key fob is about 8-10cm long, about 4-5cm wide and about 2-3cm deep. The smart key fob may weigh about 50g - 80g and can be costly to replace if lost, damaged or stolen. This is because of the time and costs involved in replacing and possibly re-programming the technical components comprised in the smart key fob (including a battery) that enables it to securely communicate with a control system and because of the time and costs that may be involved in re-programming the vehicle's control system to allow it to accept a new smart key fob. Additionally, loss of the smart key fob could lead to the theft of the vehicle since unauthorised access to the vehicle could be gained.

In a variety of situations the driver of a vehicle may prefer not to carry with him the smart key fob due to its size and/or due to the risk of damage and/or potential loss of the smart key fob (given the costs and inconvenience that would be incurred by losing or damaging it). For example, the user of the smart key fob may have driven to a destination where he intends to carry out a leisure activity such as surfing and does not want to carry the smart key fob on his person because of the likelihood of it being lost on the beach, in the sea or becoming water damaged. Many other situations arise where at his destination the driver and other users of the vehicle may not wish to carry the smart key fob on their person or within their kit.

The US patent application with publication number 2006/0186988 A1 discloses methods and apparatuses for rendering electronic keys which are left behind in a vehicle temporarily inactive. The US patent application with publication number 2003/0107469 A1 discloses a method and device for protecting motor vehicles against theft.

The DE patent application with publication number 197 11 901 C1 discloses a vehicle security system using a primary key and a secondary key wherein the functionality of the secondary key can differ from the functionality of the primary key, wherein the primary key is rendered inactive if it is present in the vehicle when the vehicle is locked with the secondary key, and wherein the inactive primary key is re-enabled when the vehicle is unlocked.

The present invention seeks to provide an improvement in the field of secure entry systems that has particular application for vehicles.

### SUMMARY OF THE INVENTION

The invention is as claimed in the appended claims.

Aspects of the invention provide a system, a vehicle and a method as claimed in the appended claims.

There is provided a security system for a vehicle comprising a control unit, a locking system, a primary key and a secondary key, the primary key and the secondary key each being normally operable to activate and deactivate the locking system forming one or more electronically operable locks usable to securely lock the doors of the vehicle; wherein: the primary key is operable to activate and deactivate the locking system, an immobiliser and the ignition of the vehicle; the secondary key is a passive transponder or a passive transceiver device operable to activate and deactivate the locking system to lock and unlock one or more doors of the vehicle and is inoperable to activate ignition; and upon activation of the locking system by means of the secondary key, at least some or all of the functionality of the primary key is caused to be disabled and/or the control unit is caused to temporarily ignore command signals transmitted by the primary key.

Initiating the use of the secondary key may influence and/or disable the functionality of the primary key (such as smart key system) such that the primary key cannot be used to gain entry to a vehicle or initiate operation of the engine of a vehicle. Ilnitiating the use of the secondary key by locking the vehicle renders a primary key stowed within the vehicle dormant so that that primary key may not be used for initiating operation of the vehicle.

Optionally, the secondary key comprises only passive components and does not require a battery for its operation. The passive nature of the secondary key may enable the secondary key to be more compact than the primary key. Optionally, the secondary key is lighter in weight than the primary key and optionally the secondary key is housed in a structure or otherwise arranged such that it is waterproof. Optionally, the secondary key is operable to perform a more limited set of functions compared to the primary key. When applied to a vehicle and used in conjunction with a primary key, a secondary key that allows one or more primary keys to be locked inside the vehicle.

Optionally, the security system comprises more than one secondary key, and one or more of those secondary keys has privileges that are different to the privileges of at least one other of those secondary keys.

Optionally, upon operation of the secondary key to activate the locking system, at least some or all of the functionality of the primary key is caused to be disabled and/or the control unit is caused to temporarily ignore command signals transmitted by the primary key when certain criteria are met, wherein said certain criteria comprises: the primary key being within a specified range of the control unit.

Optionally, the secondary key may be arranged to communicate with the control unit either directly or indirectly, to cause the control unit to ignore certain instructions or requests issued by the primary key thereby limiting at least some or all of the control of the primary key.

Alternatively or additionally, the secondary key may be arranged to communicate with the control unit either directly or indirectly, to cause the control unit to issue a command signal to the primary key instructing the primary key to stop issuing request and/or instruction signals.

Alternatively or additionally, upon operation of the secondary key to activate the locking system, at least some or all of the functionality of the primary key may be caused to be disabled by a command signal issued to the primary key instructing the primary key to stop issuing request and/or instruction signals, said command signal may be issued by the secondary key or may be issued by a transmitter disposed within the vehicle body.

Optionally, upon operation of the secondary key to activate the locking system, at least some or all of the functionality of the primary key is caused to be disabled and/or the control unit is caused to temporarily ignore command signals transmitted by the primary key when certain criteria are met, wherein said certain criteria comprises: the primary key being within a specified range of the control unit; and the secondary key being outside a specified range of the control unit. Further optionally, the primary key is thereby rendered entirely dormant or inactive and cannot be used to operate the locking system.

Optionally, upon operation of the secondary key to de-activate the locking system, at least some or all of the functionality of the primary key is caused to be re-enabled and/or the control unit is caused to respond to command signals transmitted to it by the primary key, wherein the secondary key comprises at least one transponder or transceiver.

According to some examples there is provided a security system for a vehicle, comprising a control unit, a locking system, a primary key and more than one secondary key, the primary key and the secondary keys each normally operable to activate and deactivate the locking system and upon operation of a secondary key to de-activate the locking system, at least some or all of the functionality of the primary key is caused to be re-enabled and/or the control unit is caused to respond to command signals transmitted to it by the primary key wherein one or more of those secondary keys has privileges that are different to the privileges of at least one other of those secondary keys.

Optionally, at least some or all of the functionality of the primary key is caused to be re-enabled and/or the control unit is caused to respond to command signals transmitted to it by the primary key when certain criteria are met, wherein said certain criteria comprises: the primary key being within a specified range of the control unit.

Optionally, upon using the secondary key to de-activate the locking system, the primary key is caused to be re-enabled only such that its presence within a specified range of the control unit can be verified and/or the control unit is caused to respond to command signals transmitted to it by the primary key only such that the presence of the primary key within a specified range of the control unit can be verified.

Optionally, upon verification of the presence of the primary key within the specified range, the control unit may be arranged to respond to any instructions or requests issued by the primary key thereby re-enabling all of the functionality of the primary key.

As a further optional feature, upon verification of the presence of the primary key within the specified range, the control unit may be arranged to issue a command signal to the primary key instructing the primary key to start issuing request and/or instruction signals.

Additionally, or alternatively, upon verification that the primary key is within the specified range, at least some or all of the functionality of the primary key may be caused to be re-enabled by a command signal issued to the primary key instructing the primary key to start issuing request and/or instruction signals, said command signal may be issued by the secondary key or by a transmitter disposed within the vehicle body.

Optionally, upon operation of the secondary key to de-activate the locking system, at least some or all of the functionality of the primary key may be caused to be re-enabled and/or the control unit may be caused to respond to command signals transmitted by the primary key when certain criteria are met, wherein said certain criteria comprises: the primary key being within a specified range of the control unit; and the secondary key being outside of a specified range of the control unit. The specified range may be the boundary of the vehicle.

Optionally, the primary key may be arranged to communicate with the control unit:
to activate an ignition of a vehicle;
to deactivate an immobiliser of the vehicle;
to activate the locking system of the security system so as to lock the vehicle doors; and/or
to deactivate the locking system of the security system so as to unlock the vehicle doors.

As a further optional feature, the primary and/or secondary key may be portable.

Optionally, the secondary key may be lower in weight than the primary key and/or may be smaller in size than the primary key and/or a passive device and/or the primary key may be an active device.

Additionally or alternatively, the secondary key may comprise a Radio Frequency (RF) transponder. Optionally, the RF transponder may be embedded in any one or more of: a waterproof device; a wearable device; a wrist watch; a wrist band; a plastic payment card.

Also, there is provided a vehicle comprising a security system as described in the preceding paragraphs. Optionally, the primary key may be normally operable to disengage an immobiliser of the vehicle and activate an ignition of the vehicle by communicating with the control unit of the security system only when the primary key is within the interior of the vehicle.

Optionally, upon operation of the secondary key to activate the locking system, at least some or all of the functionality of the primary key is caused to be disabled and/or the control unit is caused to temporarily ignore command signals transmitted by the primary key.

Optionally, the secondary key may only be operable to cause activation and deactivation of the locking system and may have no other capability and upon the secondary key being used to activate or deactivate the locking system, the control unit may be arranged to issue a command signal to the primary key to temporarily disable the primary key or to re-enable the primary key.

Optionally, the secondary key may only be operable to cause activation and deactivation of the locking system and to store certain data and has no other capability and upon the secondary key being used to activate or deactivate the locking system, the control unit may be arranged to issue a command signal to the primary key to temporarily disable the primary key or to re-enable the primary key. Optionally, the secondary key is able to store biometric data.

According to some, examples there is provided a secondary key for a security system as described in the above paragraphs, which may be co-operative with a primary key such that operation of the secondary key may cause, at least to some extent, the primary key to be disabled and/or for command signals issued by the primary key to be at least temporarily ignored by a control unit of the security system.

The compact nature of the secondary key, does not comprise a battery, may provide a convenient and robust secondary key that is optionally waterproof and further optionally embedded in a device such as a payment card, watch, loyalty card and many other items as well.

Optionally, the security system may comprise more than one secondary key and/or more than one primary key. Further optionally, there comprises more than one secondary key and one or more of those secondary keys has privileges that are different to the privileges of at least one other of those secondary keys.

According to some examples there is provided a security system suitable for a vehicle, the security system comprising a control unit, a locking system, one or more radio frequency antennae and an entry key comprising a radio frequency transponder, the entry key and/or transponder comprising a memory for storing encrypted access data and the radio frequency antennae operable to verify that access data and the security system operable to enable the activation and deactivation of said locking system upon verification of said access data.

Optionally, the security system may be further operable to enable the activation and deactivation of the vehicle's immobiliser and ignition upon verification of said access data.

According to some examples there is provided a key for use in the security system described in any of the relevant preceding paragraphs wherein the key comprises a radio frequency transponder, a memory for storing encrypted access data and is embedded within or otherwise encased or housed in a medium such that the key is waterproof and/or is wearable.

There is provided a method of operation of a security system, comprising: a primary key operable to activate and deactivate a locking system forming one or more electronically operable locks usable to securely lock the doors of the vehicle, an immobiliser and the ignition of a vehicle; and a secondary key operable to activate and deactivate the locking system to lock and unlock one or more doors of the vehicle and inoperable to activate the ignition; the method comprising:
(i) receiving a signal from the secondary key to activate the locking system of the security system;
wherein the secondary key is a passive transponder or a passive transceiver device;
(ii) verifying the presence of the primary key within a specified range of a control unit of the security system; and
(iii) causing at least some or all of the functionality of the primary key to be disabled and/or causing the control unit to temporarily ignore command signals transmitted by the primary key.

The control unit may also be arranged to verify the presence of the secondary key outside of a specified range of the security system before issuing a command to the primary key to disable it and/or ignoring any command signals received by it from the primary key.

Throughout the foregoing at least the following terms may be used to refer to the primary entry key: smart key, smart key fob, primary entry key and primary key. Throughout the foregoing at least the following terms may be used to refer to the secondary key of the present invention: secondary entry key, and leisure key.

### BRIEF DESCRIPTION OF THE DRAWINGS

Embodiments of the invention will now be described, by way of example only, with reference to the accompanying drawings, in which:
FIGURE 1 is a plan view of a vehicle having a security system;
FIGURE 2 is a plan view of the front of a secondary key (leisure key);
FIGURE 3 is a perspective view from the front and side of a secondary key disposed in a housing;
FIGURE 4 is a perspective view from above of a secondary key disposed in a housing;
FIGURE 5 is an instruction flow chart illustrating a sequence of operations of one aspect of the security system, wherein a smart key has been locked within the vehicle and a leisure key is used to unlock the vehicle and reactivate the smart key;
FIGURE 6 is an instruction flow chart illustrating a sequence of operations of another aspect of the security system, wherein a primary key (smart key) is left in the vehicle and the leisure key is used to lock the vehicle and deactivate the smart key;
FIGURE 7 is an instruction flow chart illustrating a sequence of operations of one aspect of the security system, wherein a smart key has been locked within the vehicle and the leisure key is used to unlock the vehicle and only selectively reactivate the smart key; and
FIGURE 8 is an instruction flow chart illustrating a sequence of operations of the security system, wherein the secondary key is operable to activate the ignition.

### DETAILED DESCRIPTION

The invention has benefit when applied to a vehicle..

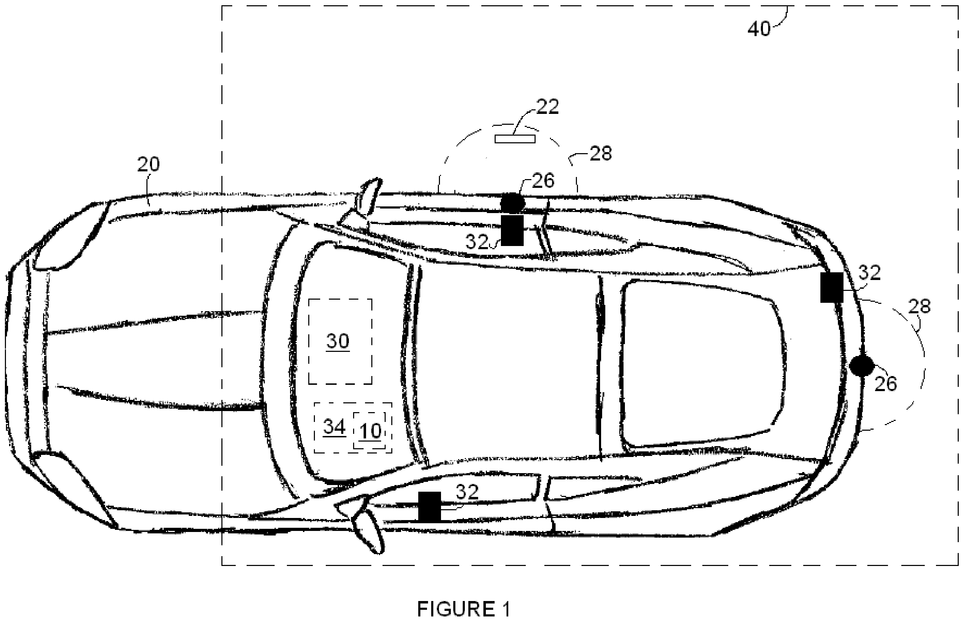

Referring to Figure 1 there is shown a plan view of a vehicle 20 which, in this example, is a car. A security system 40 for the vehicle 20 is notionally illustrated by a dotted outline. The security system 40 comprises: one or more control units 30, a primary key 10 (that is optionally portable), a secondary key 22 (that is optionally portable) and a locking system 32 fitted into the vehicle 20. The or each control unit 30 may take the form of an onboard computer system, processor or electronic control unit (ECU) capable of issuing and/or receiving signals, in particular signals to detect the presence or absence primary key 10 and encrypted signals for communicating with the primary key 10. Additionally the control unit 30 is operable to control the activation of the vehicle's immobiliser and ignition, as well as the locking system and/or other devices of the vehicle 20, by issuing command signals. The locking system 32 may take the form of one or more electronically operable locks usable to securely lock the doors of the vehicle 20 to prevent opening and thereby restrict access to the vehicle 20. The portable primary key 10 is typically referred to as a smart key 10, smart key entry system 10 or smart key fob 10. The secondary key 22 is optionally referred to as a leisure key 22.

Smart keys are known in the art. A smart key 10 is typically an electronic access and authorization system that allows a user to keep the smart key fob 10 stowed, for example within their pocket, when unlocking, locking and starting a vehicle 20. The smart key 10 is normally identified by a transceiver and one or more antennas (not shown) disposed within the vehicle's bodywork and a corresponding transceiver (not shown) within the housing of the smart key 10. In use, the vehicle 20 is automatically unlocked when the door handle, boot (trunk) release, and/or an exterior button is pressed, provided that the smart key 10 is within a certain proximity of the vehicle's antennae.

The smart key 10 is also co-operable with the control unit 30 of the vehicle to engage and disengage the immobiliser of the vehicle 20 and to activate the ignition of the vehicle 20 without actually inserting the key into the ignition, provided again that the smart key 10 is disposed within a boundary defined by the vehicle 20 and/or a certain internal proximity or specified range of the vehicle 20 and/or control unit 30, for example inside the vehicle 20, within the vehicle 20 or within a compartment of the vehicle 20. The smart key 10 is usually an active device comprising a battery and is therefore capable of carrying out encrypted and preferably wireless communication with the control unit 30 using, for example, blue-tooth, wireless LAN (Wi-Fi) or other suitable means.

When the smart key 10 is removed from the vehicle 20 and is outside of the vehicle boundary or the specified range of the control unit 30, antennae (not necessarily shown) are usable to determine that the smart key 10 is outside of the vehicle 20. The vehicle 20 is then lockable, for example by pressing a button on one of the door handles or by simply walking away from the vehicle. Contingency mechanisms prevent the vehicle 20 from being locked when the smart key 10 (primary key 10) is inside the vehicle 20. This prevents a user from locking himself out of the vehicle 20. Thus, vehicles of the prior art may only be securely locked to prevent unauthorised entry to the vehicle 20 (which may result in damage or loss of the vehicle 20) when the smart key 10 is outside of the vehicle 20.

There is provided a secondary key 22 (leisure key 22) that allows the smart key 10 to be locked inside the vehicle 20. The security system 40 can be operated to deactivate or render at least some or all of the functionality of the primary key 10 dormant upon use of the leisure key 22 to activate the locking system 32 and/or when other certain criteria is met. For example, when the smart key 10 is disposed within the vehicle 20 (for example within a specified range of the control unit 30) and the leisure key 22 (secondary key 22) is outside of the vehicle 20 and is used to activate the locking system 32 of the vehicle 20, then the smart key 10 is at least to some extent disabled, not-enabled, rendered dormant, deactivated, temporarily put out of use or otherwise disengaged from communicating with the security system 40.

Optionally, the use of the leisure key 22 involves positioning the leisure key 22 within a readable distance of one or more antennae 26 of the vehicle 20. Upon verification of an access code of the leisure key 22, the security system 40 will enable communication between a transmitter associated with the antennae 26 and/or the control unit 30 and/or the primary key 10 to occur. The command sequences that may optionally be used in such communication between the devices of the security system 40 are described further below.

When the smart key 10 is within the vehicle 20 and the leisure key 22 is used to lock the vehicle 20 then the smart key 10 is rendered entirely disabled. By "entirely disabled" it is meant that the smart key 10 cannot be used to action any functions that the primary key 10 can usually control. For example, when the primary key 10 is rendered entirely disabled or otherwise entirely deactivated, it cannot be used to activate or deactivate the locking system 32 nor can it be used to disengage or engage an immobilizer, nor can the primary key 10 be used to activate the ignition. Operation of the leisure key 22 to activate the locking system 32 causes the security system 40 to render the primary key 10 only partially disabled or selectively deactivated, as such the primary key 10 may retain some degree of operability for example it may be able to communicate with the control unit 30 when the control unit 30 polls the primary key 10 in order to verify that the primary key 10 is still disposed within a specified range of the vehicle 20. Where the term "disabled" has been used, this may mean "entirely deactivated" or it may mean "partially deactivated" unless otherwise specified.

The specific mechanism by which the primary key 10 is deactivated by the security system 40 may take many and various suitable forms, for example, upon use of the leisure key 22 to activate the locking system 32, the control unit 30 issues a signal to the primary key 10 instructing the primary key 10 not to issue any further command or request signals or not to issue any of a specific selection of further command or request signals. In another example upon use of the leisure key 22 to activate the locking system 32, the control unit 30 is configured to ignore all or ignore selected request or instruction signals issued by the primary key 10. By doing this the primary key 10, although switched on, is not able to action all or selected functions that the primary key 10 can usually control because the control unit 30 will not listen to or respond to those commands. In yet a further example, upon use of the leisure key 22 to activate the locking system 32, a component of the vehicle 20 or security system 40, other than the control unit 30, issues a signal to the primary key 10 instructing the primary key 10 not to issue any further command or request signals or not to issue any of a specific selection of further command or request signals The signal commanding the primary key 10 to stop operating may be issued by a transmitter associated with the antennae 26 used to verify the presence of the leisure key 22 for activating the locking system 32.

Similarly, operation of the leisure key 22 to deactivate the locking system 32 can trigger the reactivation of a primary key 10 stowed within the vehicle 20 and previously deactivated. As such upon use of the leisure key 22 to deactivate the locking system 32 the primary key will be entirely, or at least selectively permitted to communicate with the security system 40 and entirely or at least selectively permitted to action or control certain functions of the vehicle 20. To ensure that the primary key 10 is only reactivated when an authorized person has it in their control, the security system 40 or control unit 30 may conduct one or more checks prior to enabling the primary key 10 to resume normal or to resume a restricted operation. For example, the control unit 30 may attempt to verify the presence of the primary key 10 within the vehicle 20. If the primary key 10 is not present, the primary key 10 will not be reactivated and if not entirely disabled, the control unit 30 may be configured to action an entire disablement of that primary key's operability. However, if the primary key 10 is present within the vehicle 20 then the primary key 10 may be permitted to resume normal or resume a restricted operation.

The specific mechanism by which the primary key 10 is permitted to resume all or selected operation by the security system 40 may take many and various suitable forms, for example, upon use of the leisure key 22 to de-activate the locking system 32, the control unit 30 issues a signal to the primary key 10 instructing the primary key 10 that it can now issue any command or request signals or that it can now issue any of a specific selection of further command or request signals. In another example upon use of the leisure key 22 to de-activate the locking system 32, the control unit 30 is configured to stop ignoring (or start listening) to all or to selected request or instruction signals issued by the primary key 10. In yet a further example, upon use of the leisure key 22 to de-activate the locking system 32, a component of the vehicle 20 or security system 40, other than the control unit 30, issues a signal to the primary key 10 instructing the primary key 10 that it is now permitted to issue any command or request signals or that it is now permitted to issue any of a specific selection of further command or request signals. The signal commanding the primary key 10 to start operating again may be issued by a transmitter associated with the antennae 26 used to verify the presence of the leisure key 22 for deactivating the locking system 32.

Whereas the smart key 10 and the leisure key 22 are each normally operable to activate and deactivate the locking system 32 of the security system 40, only the smart key 10 is normally operable to activate and deactivate an immobiliser and the ignition of the vehicle 20. However, if the smart key 10 is left within the vehicle 20, once the leisure key 22 is used to lock the vehicle 20, the smart key 10 is not permitted to deactivate an immobiliser and activate the ignition of the vehicle 20 (and optionally the primary key's 10 ability to operate other functionality of the vehicle 20 is disabled). As such, if unauthorised entry is gained to a vehicle 20 locked by the leisure key 22 and in which the smart key 10 has been left, the smart key 10 will not function either to enable the vehicle's 20 immobiliser to be disengaged or to activate the ignition.

The leisure key 22 of the presently described and illustrated example is not provided with the functionality to cause operation of the immobiliser and/or ignition. In alternative examples it is envisaged that the security system 40 will be configured such that the leisure key 22 is operable to activate and/or deactivate other features of the vehicle 20.

The leisure key 22 of the illustrated example is a passive device and contains no battery. The leisure key 22 is optionally limited to only being able to lock and unlock one or more doors of the vehicle 20 by cooperation with one or more antennae 26 disposed within said one or more doors. In some other envisaged examples, a battery may be included for low-power functions whilst still enabling the battery to be light-weight. The leisure key 22 of the presently described example optionally comprises an RF (radio frequency) transponder 50 (also referred to as an RFID tag). The antennae 26 may optionally be positioned within the driver's door, optionally located in, or within close proximity to, the door handle and the boot release (trunk) of the vehicle 20. It will be understood that the specific number and position of antennae is an optional feature and whereas positioning close to the normal operating handles of the vehicle 20 provides convenience, other suitable positions for the antennae 26 may be used. The antennae 26 may have a reasonably short range 28 (range 28 may also be referred to as an interrogation zone 28). Typically, the range 28 of the antennae 26 is about 1cm to about 5cm. The range may be dependent upon a number of factors, including, but not exclusively, the frequency of operation and the method of coupling used to transmit data to the reader 26, which may be adjusted to alter the range 28. When the leisure key 22 is disposed within the interrogation zone 28, the RF transponder 50 (for example) disposed within the leisure key 22 can be identified. If it has the correct identity it may be used to lock or unlock the vehicle 20.

Optionally a secure encryption coding such as AES (Advanced Encryption Standard) 128 bit encryption is used to encrypt the communication between the antennae 28 and the transponder 50. Other suitable encryption methods may be used in other embodiments. The leisure key 22 has at least one storage medium or memory wherein one of those storage medium is restrictively accessible by the manufacturer and approved service engineers. One or more other memories or storage media is optionally accessible by a user of the leisure key 22 for uploading and downloading data, such as but not limited to personal data relating to activities and meetings scheduled and data relating to the same such as GPS data for their destination.

In the illustrated example, the leisure key 22 is more compact than the smart key 10 and has a restricted functionality compared to the smart key 10. In addition, the secondary key 22 (leisure key 22) is advantageously lighter in weight and/or smaller in size than the primary key 10. The leisure key 22 is a passive device.

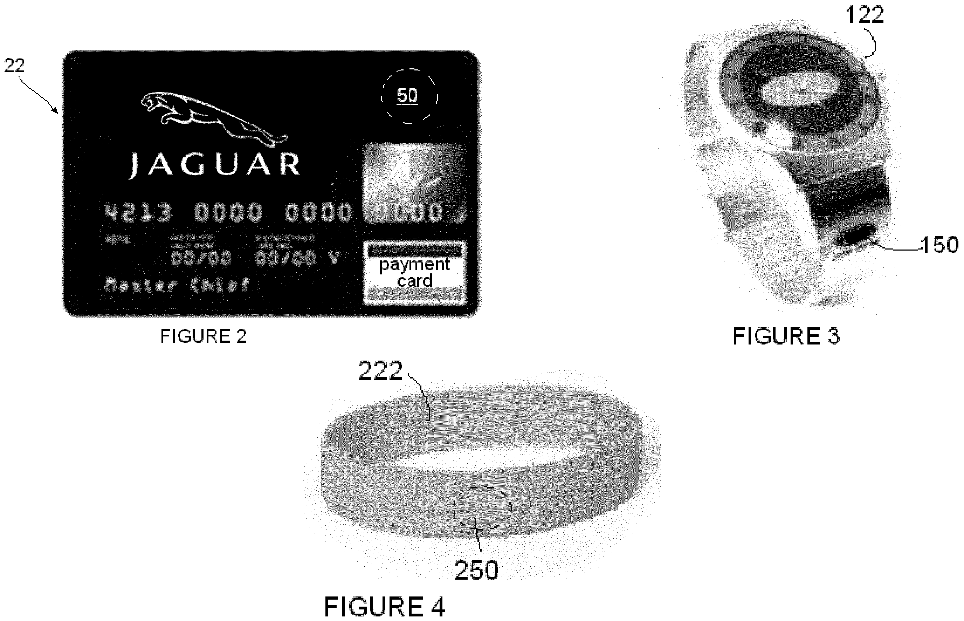

In an example, the leisure key 22 is housed in a waterproof housing. In an embodiment, the leisure key 22 is formed within a plastic payment card. This is illustrated in Figure 2, wherein it is illustrated that an RF (radio frequency) transponder 50 is embedded within the plastic payment card to form the leisure key 22. The leisure key 22 of the illustrated example is about 8cm long by about 5cm wide by about 0.1cm in depth. The leisure key 22 is therefore slim line, compact and lightweight compared to the smart key 10.

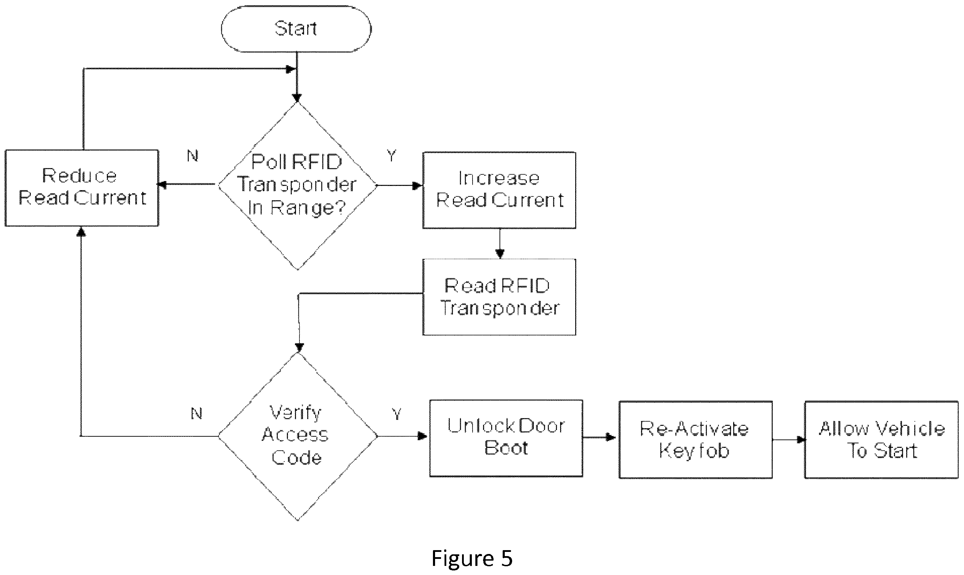

In Figure 5 an instruction flow chart illustrating a sequence of operations of one aspect of the security system 40 is shown. In this sequence, a smart key 10 has already been locked within the vehicle 20 and a leisure key 22 is being used to unlock the vehicle 20 and reactivate the smart key 10. This scenario is depicted in Figure 1. To start, the antennae or RF reader 26 intermittently (or optionally continuously) is activated to poll the RFID transponder 50 of the leisure key 22. If the leisure key 22 transponder 50 is out of the interrogation zone 28 then the antennae or RF reader 26 is paused in a low-power mode for an interval. The reader 26 is then reactivated to poll again. If the RFID transponder 50 is within the interrogation zone 28 then the current drawn by (the power consumption of) the reader 26 is increased to enable the reader 26 to perform further functions.

The reader 26 then reads the RFID tag/RF transponder 50 and is able to check an access code. If the access code is verified then the vehicle 20 is caused to be unlocked. The disabled smart key 10 that was stowed in the vehicle 20 is then re-activated and the vehicle is allowed to start. Although not illustrated, it is anticipated that prior to re-activating the smart key 10, the security system 40 will verify that the smart key 10 is still positioned within the vehicle 20. The reactivation of the smart key 10 optionally will not require any mechanical adaptation of the smart key 10 and optionally may not require any direct electronic interaction with the smart key 10 or direct communication with the smart key 10. Rather the control unit 30 of the vehicle may receive a signal from the RF reader 26 in response to which the control unit 30 will "stop ignoring" or will again "listen" to the one or more smart keys 10 disposed within the vehicle 20. The control unit 30 will know the identity of the one or more smart keys 10 disposed within the vehicle because the internal antennae (not illustrated) will have been used to poll and verify the identification of those smart keys 10.

Alternatively, if the identity of the leisure key 22 is not verified then the vehicle 20 will not be unlocked. The reader 26 current will be reduced until the reader polls for an RFID tag 50 and finds it in range 28. By requiring verification of an access code the leisure key entry system is secure.

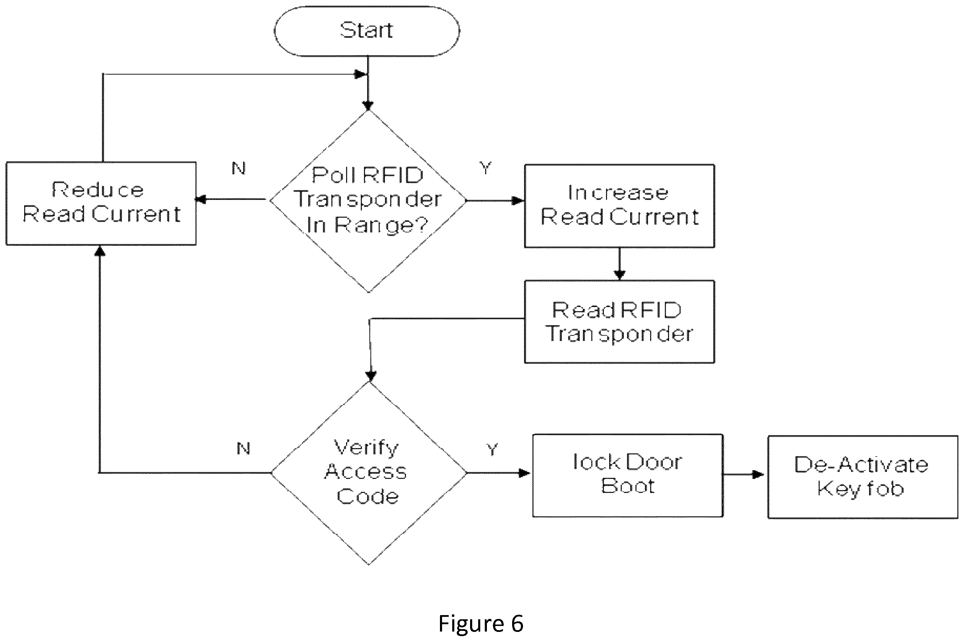

In Figure 6 an instruction flow chart illustrating a sequence of operations of a second aspect of the security system 40 is shown. The smart key 10 is left in the vehicle 20 and the leisure key 22 is used to lock the vehicle 20 and deactivate the smart key 10. The reader 26 polls the transponder 50 of the leisure key 22 and if the leisure key 22 is within the interrogation zone 28 the read current is increased so that the RFID reader 26 can compare the access code of the leisure key 22 to verify its identity. Once the access code has been verified the reader 26 will allow, optionally by communicating with a control unit 30 of the vehicle 20, one or more doors (including the boot) to be locked and the smart key 10 to be deactivated. The deactivation of the smart key 10 will not necessarily require any mechanical adaptation of the smart key 10 and optionally may not require any direct electronic interaction or direct communication with the smart key 10. Rather the control unit 30 of the vehicle may receive a signal from the RF reader 26 in response to which the control unit 30 will "ignore" the one or more smart keys 10 disposed within the vehicle 20. The control unit 30 will know the identity of the one or more smart keys 10 disposed within the vehicle 20 because the internal antennae (not illustrated) will have been used to poll and verify those smart keys 10. Because the control system 30 has been set to ignore any instructions or requests issued by the smart key 10, the smart key has effectively been disabled.

In order to reduce the amount of power used by the antennae 26, the antennae 26 may be programmed to poll for a leisure key 22 for a specified amount of time and then after that allotted time to stop polling and thus stop using power. Polling may then be initiated by a user of the leisure key 22 by, for example, attempting to use a handle or pushing a button on the outside of the vehicle 20.

Referring now to Figures 3 and 4 there are shown alternative examples of the leisure key 22. In the alternative illustrated examples, like numerals have, where possible, been used to denote like parts, albeit with the addition of the prefix "100" and "200" to indicate that these features belong to the alternative examples respectively.

In the embodiment illustrated in Figure 3, the leisure key 122 is a wrist watch, having a transponder 150 embedded in its strap. As such, the leisure key 122 is wearable. Optionally the leisure key 122 is waterproof. In an embodiment illustrated in Figure 4, the leisure key 222 is a wrist band, optionally formed out of rubber and having a transponder 250 embedded within it. As such, the leisure key 222 is wearable and optionally waterproof.

The leisure key 22, 122, 222 optionally may be wearable (about a wrist, or neck as examples), may be attachable to a person's clothing (by means of a clip or hook and loop fastener for example). The leisure key 22 optionally may comprise only one transponder 50, but may comprise more than one. For example, the leisure key 22 may comprise two separate transponders, which may be required to separately operate the driver's door and the boot. This may add an extra level of security.

It can be appreciated that various changes may be made, for example, it is envisaged the leisure key 22, 122, 222 as well as being operable to activate the locking system 32 for securely locking the vehicle doors, the leisure key 22, 122, 222 may also be operable to cause the secure locking of an internal compartment 34 of the vehicle 20 such as a glove box (as illustrated in Figure 1). The leisure key 22, 122, 222 therefore offers additional secure protection for items including the smart key 10 which as well as being locked within the vehicle 20 can additionally be locked within an internal compartment 34. By concealing said items, optionally including the smart key 10 from view, risk of opportunist theft of those items may be reduced. One or more other separately lockable compartments 34 may be provided which are lockable (optionally by the control unit 30) upon receiving a signal from the leisure key 22, 122, 222 (optionally via the reader 26).

In a further option, the leisure key 22, 122, 222 may comprise means for storing data.

In other envisaged examples, it is expected that the security system may utilise more than one leisure key and that the more than one leisure keys may have different functionality or privileges dependent upon the intended user of those leisure keys. For example, a master leisure key may be the only key that when used to unlock the vehicle, or when present within the vehicle (within a specified range of the control unit) is capable of causing the reactivation of the full functionality of the smart key and other servant leisure keys may be restricted to only allowing unlocking and locking of the vehicle and have restricted or no impact on reactivating the one or more dormant smart keys. As such a parent or more responsible person can control the master leisure key and thus control the reactivation of the smart key's full functionality. A child may be trusted to access the vehicle but not reactivate the smart key. Similarly, where the master leisure key causes locking of an internal compartment, the servant leisure key may be restricted from unlocking the compartment to restrict access to the smart key disposed within the compartment. In some examples, the use of the master leisure key may impart a restriction on the smart key, for example to prevent the vehicle from exceeding a maximum speed.

In the envisaged examples of the immediately preceding paragraph and other envisaged embodiments, one or more of the leisure keys may comprise storage means for data such as: user preferences (media settings; seat positions; mirror positions; valet settings); GPS navigational destinations; active safe settings; DTC codes stored for services; phone numbers; biometric data; fleet data and information for rewards schemes as examples only.

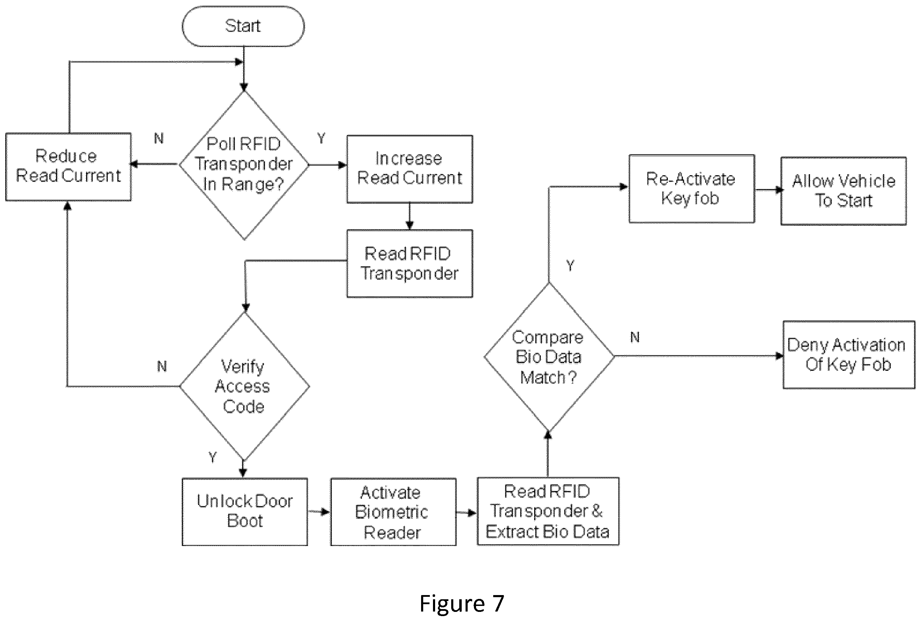

In Figure 7 an instruction flow chart illustrating a sequence of operations of one aspect of the security system is shown. In this illustrated operation sequence the leisure key has storage means for biometric data and a smart key has been locked within the vehicle. A leisure key is used to unlock the vehicle and the security system is capable of determining whether the user of that leisure key is authorised to reactivate the smart key. For example, the biometric data may include: the height of a person or a facial image and a camera and recognition software may be used to compare the user of the leisure key to the biometric data stored on that leisure key and based upon verifying the identity of the user, the smart key would be reactivated. The recognition software may determine that the user's biometric details do not match the biometric information stored on the key and may therefore deny activation of the smart key. In this way a lesser responsible or unauthorised person using the leisure key would not gain access to the smart key.

It will be understood that whereas the examples have been described using radio frequency technology (RFID tag/ transponder and a reader), that other suitable components may be used for the leisure key and its associated reader. For example, even if it is not a part of the claimed invention, the leisure key may optional comprise a small battery or other power source and may transmit a signal from the leisure key that may optionally be detected by one or more receivers. Furthermore, it is not a part of the claimed invention, but the use of semi-passive or active RFID tags is envisaged.

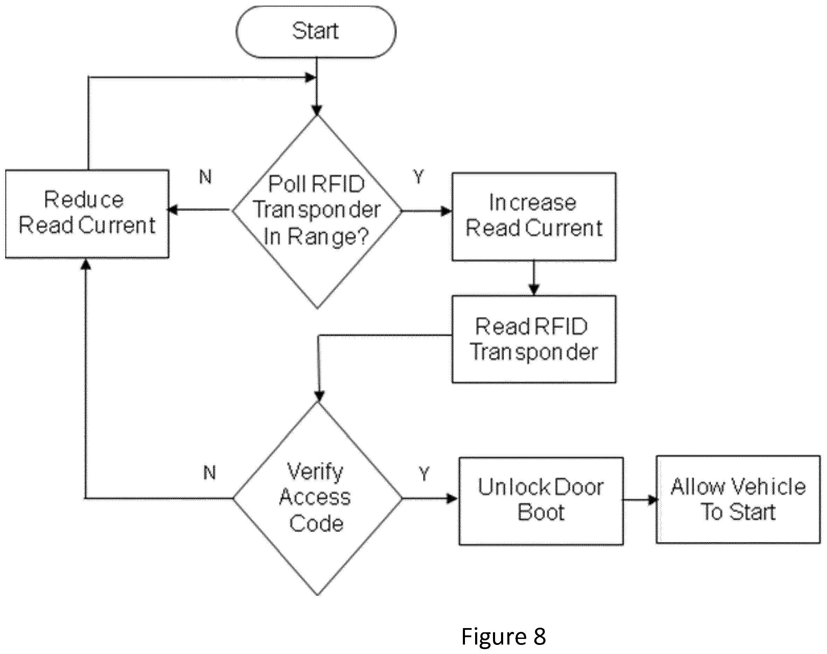

Additionally, whereas it has been described that a particular beneficial application of an entry key (leisure key) suitable for a vehicle 20 that utilises an RF transponder 50 without a battery such that the entry key may have a compact format (and optionally embedded within an apparatus or clothing as examples) and that is optionally waterproof, is that it can be used as a temporary replacement for a known smart key, it is envisaged that in some examples the security system 40 will be programmed to enable the leisure key 22 to deactivate and activate the immobiliser, ignition and other features of the vehicle 20. In such an application the smart key 10 may be dispensed with entirely and its presence within the vehicle 20 is not required. Figure 8 shows, schematically a sequence of operations that may take place in such an embodiment. The compact leisure key 22 is positioned in range of one or more antennae such that the RF transponder within the compact leisure key 22 can be read. If the, preferably encrypted, access code of the RF transponder 50 is verified then the control unit and/or another component of the security system (such as a transmitter associated with the antenna used to read or interrogate the leisure key) will issue instructive signals to cause and/or allow, that and/or all doors of the vehicle to be unlocked; the immobiliser to be disarmed and upon receiving a further input from the authorised entrant, the ignition to be activated.

It will be understood upon reading the foregoing that the leisure key, secondary key or entry key described herein may optionally have a compact and/or waterproof and/or wearable characteristic to provide beneficial convenience and optional robustness to the entry key. The entry key may be embedded in a shock proof, or temperature proof casing, provided that the casing or apparatus does not interfere with the normal operation of the RF transponder for communicating with an RF antennae. By way of non-limiting example only, the following list of items that the entry key could be formed as or in is provided: watch strap, payment (credit or debit) card. 1/4 size credit card e.g. loyalty card, umbrella, bracelet, ring, mobile phone case, mobile phone, sunglasses, shoes and other footwear, wallet or purse, wrist band, belt, lanyard, clothing, sports equipment, bicycle, snowboard, skis, surf board and trainers.

For the avoidance of doubt, the term "key" as used herein should be taken to mean an entry device that is co-operable or communicable with a vehicle security system so as to permit, at least, the vehicle doors or other closures to be locked or unlocked. Such devices may additionally, but not essentially, be operable to activate or deactivate a vehicle security alarm and/or immobilizer. Importantly, the term key is not intended to be limited to having only a mechanical form for mating with a lock in an object, but rather is intended to encompass devices that can lock and/or unlock an object. The term key is intended to have a broad meaning and is intended to optionally include any entry device that is capable of permitting and preventing access which may optionally occur in conjunction with other components of a security system. As such a key as referred to in the foregoing may or may not be capable of gaining access to an object on its own but is capable of doing so when used with a control unit for example. Key may include, but not exclusively, entry devices that may comprise: electronic data carriers; magnetic and/or electromagnetic components; components for communicating by digital, analogue, electromagnetic (including, but not exclusively radio frequency and infra red) and other signaling means; electronic components such as transponders, transceivers and inductive couplers; encryption and/or other personal identification numbers or codes.

## Claims

1. A security system (40) for a vehicle (20) comprising a control unit (30), a locking system (32), a primary key (10) and a secondary key (22), the primary key and the secondary key each being normally operable to activate and deactivate the locking system (32) forming one or more electronically operable locks usable to securely lock the doors of the vehicle (20); wherein:
the primary key (10) is operable to activate and deactivate the locking system, an immobiliser and the ignition of the vehicle (20) provided that the primary key is disposed within a boundary defined by the vehicle and/or a certain internal proximity or specified range of the vehicle and/or control unit (30);
the secondary key (22) is a passive transponder or a passive transceiver device operable to activate and deactivate the locking system (32) to lock and unlock one or more doors of the vehicle (20) and is inoperable to activate ignition;
upon activation of the locking system (32) by means of the secondary key (22), at least some or all of the functionality of the primary key (10) is caused to be disabled and/or the control unit is caused to temporarily ignore command signals transmitted by the primary key (10);
upon operation of the secondary key (22) to de-activate the locking system (32), the control unit (30) attempts to verify the presence of the primary key (10) within the vehicle and if the primary key (10) is present within the vehicle (20) then at least some or all of the primary key's functionality of activating and deactivating the locking system, an immobiliser and the ignition of the vehicle (20) is caused to be re-enabled and/or the control unit (30) is caused to respond to command signals transmitted to it by the primary key, and if the primary key (10) is not present within the vehicle (20), the primary key (10) is not re-enabled.

2. A security system (40) according to claim 1, wherein the security system comprises more than one secondary key (22), and one or more of those secondary keys has privileges that are different to the privileges of at least one other of those secondary keys.

3. A security system (40) according to claim 1 or claim 2, wherein upon activation of the locking system (32) by means of the secondary key (22), at least some or all of the functionality of the primary key (10) is caused to be disabled and/or the control unit (30) is caused to temporarily ignore command signals transmitted by the primary key (10) when certain criteria are met, wherein said certain criteria comprises:
the primary key (10) being within a specified range of the control unit (30).

4. A security system (40) according to any preceding claim wherein the secondary key (22) is arranged to communicate with the control unit (30) either directly or indirectly, to cause the control unit to ignore certain instructions or requests issued by the primary key (10) thereby disabling at least some or all of the functionality of the primary key.

5. A security system (40) according to any preceding claim wherein the secondary key (22) is arranged to communicate with the control unit (30) either directly or indirectly, to cause the control unit to issue a command signal to the primary key (10) instructing the primary key to stop issuing request and/or instruction signals.

6. A security system (40) according to any preceding claim, wherein at least some or all of the functionality of the primary key (10) is caused to be re-enabled and/or the control unit (30) is caused to respond to command signals transmitted to it by the primary key when certain criteria are met, wherein said certain criteria comprises:
the primary key being within a specified range of the control unit.

7. A security system (40) according to any preceding claim where upon using the secondary key (22) to de-activate the locking system (32), the primary key (10) is caused to be re-enabled only such that its presence within a specified range of the control unit (30) can be verified and/or the control unit is caused to respond to command signals transmitted to it by the primary key only such that the presence of the primary key within a specified range of the control unit can be verified.

8. A security system (40) according to claim 7 where upon verification of the presence of the primary key (10) within a specified range, the control unit (30) is arranged to respond to any instructions or requests issued by the primary key thereby re-enabling all of the functionality of the primary key.

9. A security system (40) according to claim 7 where upon verification of the presence of the primary key (10) within a specified range, the control unit (30) is arranged to issue a command signal to the primary key instructing the primary key to start issuing request and/or instruction signals.

10. A security system (40) according to any preceding claim wherein the secondary key (22) housed in a waterproof housing.

11. A security system (40) according to any preceding claim wherein the secondary key (22) comprises a radio frequency transponder embedded in a wearable device.

12. A security system (40) according to any preceding claim wherein the secondary key comprises a radio frequency transponder embedded in a shock proof or temperature proof casing.

13. A vehicle (20) comprising a security system (40) according to any of the preceding claims.

14. A method of operation of a security system (40), comprising: a primary key (10) operable to activate and deactivate a locking system (32) forming one or more electronically operable locks usable to securely lock the doors of the vehicle (20) provided that the primary key is disposed within a boundary defined by the vehicle and/or a certain internal proximity or specified range of the vehicle and/or control unit (30), an immobiliser and the ignition of a vehicle (20); and a secondary key (22) operable to activate and deactivate the locking system (32) to lock and unlock one or more doors of the vehicle (20) and inoperable to activate the ignition; the method comprising:
(i) receiving a signal from the secondary key (22) to activate the locking system (32) of the security system;
wherein the secondary key is a passive transponder or a passive transceiver device;
(ii) verifying the presence of the primary key within a specified range of a control unit of the security system; and
(iii) causing at least some or all of the functionality of the primary key (10) to be disabled and/or causing the control unit (30) to temporarily ignore command signals transmitted by the primary key;
(iv) upon operation of the secondary key (22) to de-activate the locking system (32), causing the control unit (30) to attempt to verify the presence of the primary key (10) within the vehicle and if the primary key (10) is present within the vehicle (20) then at least some or all of the primary key's functionality of activating and deactivating the locking system, an immobiliser and the ignition of the vehicle (20) is caused to be re-enabled and/or the causing the control unit (30) to respond to command signals transmitted to it by the primary key, and if the primary key (10) is not present within the vehicle (20), not causing the primary key (10) to be re-enabled.

## Patentansprüche

1. Sicherheitssystem (40) für ein Fahrzeug (20), umfassend eine Steuereinheit (30), ein Verriegelungssystem (32), einen Hauptschlüssel (10) und einen Nebenschlüssel (22), wobei der Hauptschlüssel und der Nebenschlüssel jeweils in der Regel betriebsfähig sind, um das Verriegelungssystem (32) zu aktivieren und zu deaktivieren, das ein oder mehrere elektronisch betriebsfähige Schlösser ausbildet, die zum sicheren Verriegeln der Türen des Fahrzeugs (20) verwendbar sind; wobei:
der Hauptschlüssel (10) betriebsfähig ist, um das Verriegelungssystem, eine Wegfahrsperre und die Zündung des Fahrzeugs (20) zu aktivieren und zu deaktivieren, sofern sich der Hauptschlüssel innerhalb einer von dem Fahrzeug definierten Grenze und/oder einer bestimmten inneren Lage oder einer spezifizierten Reichweite des Fahrzeugs und/oder der Steuereinheit (30) angeordnet ist;
der Nebenschlüssel (22) ein passiver Transponder oder eine passive Transceivervorrichtung ist, die betriebsfähig ist, um das Verriegelungssystem (32) zum Verriegeln und Entriegeln einer oder mehrerer Türen des Fahrzeugs (20) zu aktivieren und zu deaktivieren, und nicht betriebsfähig ist, um die Zündung zu aktivieren;
bei Aktivierung des Verriegelungssystems (32) mittels des Nebenschlüssels (22) veranlasst wird, dass die Funktionalität des Hauptschlüssels (10) zumindest teilweise oder vollständig gesperrt wird, und/oder die Steuereinheit veranlasst wird, Befehlssignale, die von dem Hauptschlüssel (10) gesendet werden, vorübergehend zu ignorieren;
die Steuereinheit (30) bei Betreiben des Nebenschlüssels (22) zum Deaktivieren des Verriegelungssystems (32) versucht, die Anwesenheit des Hauptschlüssels (10) in dem Fahrzeug zu verifizieren, und wenn der Hauptschlüssel (10) in dem Fahrzeug (20) vorhanden ist, veranlasst wird, dass die Funktionalität des Hauptschlüssels zum Aktivieren und Deaktivieren des Verriegelungssystems, einer Wegfahrsperre und der Zündung des Fahrzeugs (20) zumindest teilweise oder vollständig wieder freigegeben wird, und/oder die Steuereinheit (30) veranlasst wird, auf Befehlssignale zu antworten, die von dem Hauptschlüssel an diese gesendet werden, und wenn der Hauptschlüssel (10) nicht in dem Fahrzeug (20) vorhanden ist, der Hauptschlüssel (10) nicht wieder freigegeben wird.

2. Sicherheitssystem (40) nach Anspruch 1, wobei das Sicherheitssystem mehr als einen Nebenschlüssel (22) umfasst, und ein oder mehrere dieser Nebenschlüssel Berechtigungen aufweisen, die sich von den Berechtigungen zumindest eines anderen der Nebenschlüssel unterscheiden.

3. Sicherheitssystem (40) nach Anspruch 1 oder 2, wobei bei der Aktivierung des Verriegelungssystems (32) mittels des Nebenschlüssels (22) veranlasst wird, dass die Funktionalität des Hauptschlüssels (10) zumindest teilweise oder vollständig gesperrt wird, und/oder die Steuereinheit (30) veranlasst wird, von dem Hauptschlüssel (10) gesendete Befehlssignale vorübergehend zu ignorieren, wenn bestimmte Kriterien erfüllt sind, wobei die bestimmten Kriterien umfassen:
dass sich der Hauptschlüssel (10) innerhalb einer spezifizierten Reichweite der Steuereinheit (30) befindet.

4. Sicherheitssystem (40) nach einem der vorhergehenden Ansprüche, wobei der Nebenschlüssel (22) eingerichtet ist, um mit der Steuereinheit (30) entweder direkt oder indirekt zu kommunizieren, um die Steuereinheit zu veranlassen, bestimmte Anweisungen oder Anforderungen zu ignorieren, die von dem Hauptschlüssel (10) ausgegeben werden, wobei dadurch die Funktionalität des Hauptschlüssels zumindest teilweise oder vollständig deaktiviert wird.

5. Sicherheitssystem (40) nach einem der vorhergehenden Ansprüche, wobei der Nebenschlüssel (22) eingerichtet ist, um mit der Steuereinheit (30) entweder direkt oder indirekt zu kommunizieren, um die Steuereinheit zu veranlassen, ein Befehlssignal an den Hauptschlüssel (10) auszugeben, das den Hauptschlüssel anweist, die Ausgabe von Anforderungs- und/oder Anweisungssignalen zu stoppen.

6. Sicherheitssystem (40) nach einem der vorhergehenden Ansprüche, wobei veranlasst wird, dass die Funktionalität des Hauptschlüssels (10) zumindest teilweise oder vollständig wieder freigegeben wird, und/oder die Steuereinheit (30) veranlasst wird, auf Befehlssignale zu reagieren, die von dem Hauptschlüssel an diese gesendet werden, wenn bestimmte Kriterien erfüllt sind, wobei die bestimmten Kriterien umfassen:
dass sich der Hauptschlüssel innerhalb einer spezifizierten Reichweite der Steuereinheit befindet.

7. Sicherheitssystem (40) nach einem der vorhergehenden Ansprüche, wobei veranlasst wird, dass der Hauptschlüssel (10) bei Verwendung des Nebenschlüssels (22) zum Deaktivieren des Verriegelungssystems (32) nur derart wieder freigegeben wird, dass seine Anwesenheit innerhalb einer spezifizierten Reichweite der Steuereinheit (30) verifiziert werden kann, und/oder die Steuereinheit veranlasst wird, nur derart auf von dem Hauptschlüssel an diese gesendete Befehlssignale zu reagieren, dass die Anwesenheit des Hauptschlüssels innerhalb einer spezifizierten Reichweite der Steuereinheit verifiziert werden kann.

8. Sicherheitssystem (40) nach Anspruch 7, wobei die Steuereinheit (30) bei der Verifizierung der Anwesenheit des Hauptschlüssels (10) innerhalb einer spezifizierten Reichweite eingerichtet ist, um auf beliebige Anweisungen oder Anforderungen, die von dem Hauptschlüssel ausgegeben werden, zu reagieren, wobei dadurch die Funktionalität des Hauptschlüssels vollständig wieder freigegeben wird.

9. Sicherheitssystem (40) nach Anspruch 7, wobei die Steuereinheit (30) bei der Verifizierung der Anwesenheit des Hauptschlüssels (10) innerhalb einer spezifizierten Reichweite eingerichtet ist, um ein Befehlssignal an den Hauptschlüssel auszugeben, das den Hauptschlüssel zum Starten der Ausgabe von Anforderungs- und/oder Anweisungssignalen anweist.

10. Sicherheitssystem (40) nach einem der vorhergehenden Ansprüche, wobei der Nebenschlüssel (22) in einem wasserdichten Gehäuse aufgenommen ist.

11. Sicherheitssystem (40) nach einem der vorhergehenden Ansprüche, wobei der Nebenschlüssel (22) einen Funkfrequenztransponder umfasst, der in einer tragbaren Vorrichtung eingebettet ist.

12. Sicherheitssystem (40) nach einem der vorhergehenden Ansprüche, wobei der Nebenschlüssel einen Funkfrequenztransponder umfasst, der in einem stoßfesten oder temperaturbeständigen Gehäuse eingebettet ist.

13. Fahrzeug (20), umfassend ein Sicherheitssystem (40) nach einem der vorhergehenden Ansprüche.

14. Verfahren zum Betreiben eines Sicherheitssystems (40), umfassend: einen Hauptschlüssel (10), der betriebsfähig ist, um ein Verriegelungssystem (32), das ein oder mehrere elektronisch betriebsfähige Schlösser ausbildet, die zum sicheren Verriegeln der Türen des Fahrzeugs (20) verwendbar sind, sofern der Hauptschlüssel innerhalb einer von dem Fahrzeug definierten Grenze und/oder einer bestimmten inneren Lage oder einer spezifizierten Reichweite des Fahrzeugs und/oder der Steuereinheit (30) angeordnet ist, eine Wegfahrsperre und die Zündung eines Fahrzeugs (20) zu aktivieren und deaktivieren; und einen Nebenschlüssel (22), der betriebsfähig ist, um das Verriegelungssystem (32) zu aktivieren und zu deaktivieren, um eine oder mehrere Türen des Fahrzeugs (20) zu verriegeln und zu entriegeln, und der nicht betriebsfähig ist, um die Zündung zu aktivieren; wobei das Verfahren umfasst:
(i) Empfangen eines Signals von dem Nebenschlüssel (22), um das Verriegelungssystem (32) des Sicherheitssystemes zu aktivieren;
wobei der Nebenschlüssel ein passiver Transponder oder eine passive Transceivervorrichtung ist;
(ii) Verifizieren der Anwesenheit des Hauptschlüssels innerhalb einer spezifizierten Reichweite einer Steuereinheit des Sicherheitssystems; und
(iii) Veranlassen, dass die Funktionalität des Hauptschlüssels (10) zumindest teilweise oder vollständig gesperrt wird, und/oder Veranlassen, dass die Steuereinheit (30) von dem Hauptschlüssel gesendete Befehlssignale vorübergehend ignoriert;
(iv) bei Betreiben des Nebenschlüssels (22) zum Deaktivieren des Verriegelungssystems (32) Veranlassen der Steuereinheit (30), dass diese versucht, die Anwesenheit des Hauptschlüssels (10) in dem Fahrzeug zu verifizieren, und wenn der Hauptschlüssel (10) in dem Fahrzeug (20) anwesend ist, veranlasst wird, dass die Funktionalität des Hauptschlüssels zum Aktivieren und Deaktivieren des Verriegelungssystems, einer Wegfahrsperre und der Zündung des Fahrzeugs (20) zumindest teilweise oder vollständig wieder freigegeben wird, und/oder Veranlassen der Steuereinheit (30), dass diese auf Befehlssignale reagiert, die von dem Hauptschlüssel an diese gesendet werden, und wenn der Hauptschlüssel (10) nicht in dem Fahrzeug (20) anwesend ist, kein Veranlassen, dass der Hauptschlüssel (10) wieder freigegeben wird.

## Revendications

1. Système de sécurité (40) d'un véhicule (20) comprenant une unité de commande (30), un système de verrouillage (32), une clé primaire (10) et une clé secondaire (22), la clé primaire et la clé secondaire pouvant chacune être normalement actionnées pour activer et désactiver le système de verrouillage (32) formant un ou plusieurs verrous pouvant être actionnés électroniquement et pouvant être utilisés pour verrouiller en toute sécurité les portières du véhicule (20) ; dans lequel :
la clé primaire (10) peut être actionnée pour activer et désactiver le système de verrouillage, un système antidémarrage et l'allumage du véhicule (20) à condition que la clé primaire soit disposée à l'intérieur d'une limite définie par le véhicule et/ou à une certaine proximité interne ou à une portée spécifiée du véhicule et/ou de l'unité de commande (30) ;
la clé secondaire (22) est un transpondeur passif ou un dispositif émetteur-récepteur passif pouvant être actionné pour activer et désactiver le système de verrouillage (32) afin de verrouiller et de déverrouiller une ou plusieurs portières du véhicule (20) et ne peut pas être actionné pour activer l'allumage ;
lors de l'activation du système de verrouillage (32) au moyen de la clé secondaire (22), au moins une partie ou la totalité de la fonctionnalité de la clé primaire (10) est amenée à être désactivée et/ou l'unité de commande est amenée à ignorer temporairement les signaux de commande transmis par la clé primaire (10) ;
lors de l'actionnement de la clé secondaire (22) destiné à désactiver le système de verrouillage (32), l'unité de commande (30) essaie de vérifier la présence de la clé primaire (10) à l'intérieur du véhicule et si la clé primaire (10) est présente à l'intérieur du véhicule (20), alors au moins une partie ou la totalité de la fonctionnalité de la clé primaire, destinée à activer et à désactiver le système de verrouillage, un système antidémarrage et l'allumage du véhicule (20) est amenée à être réactivée et/ou l'unité de commande (30) est amenée à réagir aux signaux de commande qui lui sont transmis par la clé primaire, et si la clé primaire (10) n'est pas présente à l'intérieur du véhicule (20), la clé primaire (10) n'est pas réactivée.

2. Système de sécurité (40) selon la revendication 1, le système de sécurité comprenant pus d'une clé secondaire (22), et une ou plusieurs de ces clés secondaires ayant des privilèges qui sont différents des privilèges d'au moins une autre de ces clés secondaires.

3. Système de sécurité (40) selon la revendication 1 ou 2, dans lequel, lors de l'activation du système de verrouillage (32) au moyen de la clé secondaire (22), au moins une partie ou la totalité de la fonctionnalité de la clé primaire (10) est amenée à être désactivée et/ou l'unité de commande (30) est amenée à ignorer temporairement les signaux de commande transmis par la clé primaire (10) lorsque certains critères sont remplis, dans lequel lesdits certains critères comprennent :
la clé primaire (10) se trouvant à l'intérieur d'une portée spécifiée de l'unité de commande (30).

4. Système de sécurité (40) selon une quelconque revendication précédente, dans lequel la clé secondaire (22) est agencée pour communiquer directement ou indirectement avec l'unité de commande (30), pour amener l'unité de commande à ignorer certaines instructions ou demandes émises par la clé primaire (10), afin de désactiver ainsi au moins une partie ou la totalité de la fonctionnalité de la clé primaire.

5. Système de sécurité (40) selon une quelconque revendication précédente, dans lequel la clé secondaire (22) est agencée pour communiquer directement ou indirectement avec l'unité de commande (30), pour amener l'unité de commande à émettre un signal de commande vers la clé primaire (10), demandant à la clé primaire de cesser d'émettre des signaux de demande et/ou d'instruction.

6. Système de sécurité (40) selon une quelconque revendication précédente, dans lequel au moins une partie ou la totalité de la fonctionnalité de la clé primaire (10) est amenée à être réactivée et/ou l'unité de commande (30) est amenée à réagir à des signaux de commande qui lui sont transmis par la clé primaire lorsque certains critères sont remplis, dans lequel lesdits certains critères comprennent :
la clé primaire se trouvant à l'intérieur d'une portée spécifiée de l'unité de commande.

7. Système de sécurité (40) selon une quelconque revendication précédente, dans lequel, lors de l'utilisation de la clé secondaire (22) pour désactiver le système de verrouillage (32), la clé primaire (10) est amenée à être réactivée uniquement de sorte que sa présence à l'intérieur d'une portée spécifiée de l'unité de commande (30) puisse être vérifiée et/ou que l'unité de commande soit amenée à réagir aux signaux de commande qui lui sont transmis par la clé primaire uniquement de sorte que la présence de la clé primaire à l'intérieur d'une portée spécifiée de l'unité de commande puisse être vérifiée.

8. Système de sécurité (40) selon la revendication 7, dans lequel, après vérification de la présence de la clé primaire (10) à l'intérieur d'une portée spécifiée, l'unité de commande (30) est agencée pour répondre à toute instruction ou demande émise par la clé primaire, afin de réactiver ainsi toutes les fonctionnalités de la clé primaire.

9. Système de sécurité (40) selon la revendication 7, dans lequel, après vérification de la présence de la clé primaire (10) à l'intérieur d'une portée spécifiée, l'unité de commande (30) est agencée pour émettre un signal de commande vers la clé primaire, demandant à la clé primaire de commencer à émettre des signaux de demande et/ou d'instruction.

10. Système de sécurité (40) selon une quelconque revendication précédente, dans lequel la clé secondaire (22) est logée dans un boîtier imperméable.

11. Système de sécurité (40) selon une quelconque revendication précédente, dans lequel la clé secondaire (22) comprend un transpondeur à radiofréquence intégré dans un dispositif portable.

12. Système de sécurité (40) selon une quelconque revendication précédente, dans lequel la clé secondaire comprend un transpondeur à radiofréquence intégré dans un boîtier résistant aux chocs ou aux températures extrêmes.

13. Véhicule (20) comprenant un système de sécurité (40) selon l'une quelconque des revendications précédentes.

14. Procédé d'actionnement d'un système de sécurité (40), comprenant : une clé primaire (10) pouvant être actionnée pour activer et désactiver un système de verrouillage (32) formant un ou plusieurs verrous pouvant être actionnés électroniquement et pouvant être utilisés pour verrouiller en toute sécurité les portières du véhicule (20) à condition que la clé primaire soit disposée à l'intérieur d'une limite définie par le véhicule et/ou à une certaine proximité interne ou à une portée spécifiée du véhicule et/ou de l'unité de commande (30), un système antidémarrage et l'allumage du véhicule (20) ; et une clé secondaire (22) pouvant être actionnée pour activer et désactiver le système de verrouillage (32) afin de verrouiller et de déverrouiller une ou plusieurs portières du véhicule (20) et ne pouvant pas être actionnée pour activer l'allumage ; le procédé comprenant :
(i) la réception d'un signal de la clé secondaire (22) pour activer le système de verrouillage (32) du système de sécurité ;
dans lequel la clé secondaire est un transpondeur passif ou un dispositif émetteur-récepteur passif ;
(ii) la vérification d la présence de la clé primaire à l'intérieur d'une portée spécifiée d'une unité de commande du système de sécurité ; et à
(iii) le fait d'amener au moins une partie ou la totalité de la fonctionnalité de la clé primaire (10) à être désactivée et/ou d'amener l'unité de commande (30) à ignorer temporairement les signaux de commande transmis par la clé primaire ;
(iv) lors de l'actionnement de la clé secondaire (22) destiné à désactiver le système de verrouillage (32), le fait d'amener l'unité de commande (30) à essayer de vérifier la présence de la clé primaire (10) à l'intérieur du véhicule et si la clé primaire (10) est présente à l'intérieur du véhicule (20), alors au moins une partie ou la totalité de la fonctionnalité de la clé primaire, destinée à activer et à désactiver le système de verrouillage, un système antidémarrage et l'allumage du véhicule (20) est amenée à être réactivée et/ou l'unité de commande (30) est amenée à réagir aux signaux de commande qui lui sont transmis par la clé primaire, et si la clé primaire (10) n'est pas présente à l'intérieur du véhicule (20), la clé primaire (10) n'est pas amenée à être réactivée.
